# EUROPÄISCHE PATENTSCHRIFT

(11) **EP 1 214 145 B1**
(45) Veröffentlichungstag und Bekanntmachung des Hinweises auf die Patenterteilung: **06.10.2004**
(21) Anmeldenummer: 00943995.1
(22) Anmeldetag: 05.07.2000
(51) Int. Cl.: B01J 23/96, B01J 38/68, C22B 11/02

(54) **VERFAHREN ZUR REGENERIERUNG VON PLATINGRUPPENMETALL-SUSPENSIONSKATALYSATOREN**
METHOD FOR REGENERATING PLATINUM GROUP METAL SUSPENSION CATALYSTS
PROCEDE DE REGENERATION DE CATALYSEURS EN SUSPENSION A BASE DE METAUX DU GROUPE DU PLATINE

(30) Priorität: 24.08.1999 DE 19940127; 25.08.1999 DE 19940459
(43) Veröffentlichungstag der Anmeldung: 19.06.2002
(73) Patentinhaber: Degussa AG, 40474 Düsseldorf (DE)
(72) Erfinder: RENNER, Hermann, D-78333 Stockach (DE); HERZOG, Hans, D-79410 Badenweiler-Lipburg (DE)
(86) Internationale Anmeldenummer: PCT/EP2000/006301
(87) Internationale Veröffentlichungsnummer: WO 2001/014058

(56) Entgegenhaltungen:
- GB-A- 922 021
- GB-A- 975 730
- GB-A- 1 090 294

## Beschreibung

Die Erfindung betrifft ein Verfahren zur Regenerierung von Platingruppenmetallkatalysatoren, insbesondere Pd-Mohren, und trägergebundenen Pd-Katalysatoren. Die Regenerierung umfasst ein oxidierendes Auflösen des gebrauchten Katalysators und eine Ausfällung unter Einsatz eines Reduktionsmittels.

Es ist bekannt, dass Suspensionskatalysatoren mit einem oder mehreren Platingruppenmetallen als wirksamer Katalysatorkomponente durch chemische, mechanische oder thermische Einflüsse desaktiviert werden können und im Hinblick auf die Edelmetallkosten regeneriert werden müssen. Unter dem Begriff Suspensionskatalysatoren werden nachfolgend sowohl trägergebundene als auch nichtträgergebundene Katalysatoren verstanden, deren katalytisch wirksame Hauptkomponente aus einem oder mehreren Platingruppenmetallen besteht. Zusätzlich können die Katalysatoren aber ein oder mehrere andere Elemente oder Elementverbindungen zum Zwecke der Modifizierung des Katalysators, etwa zur Beeinflussung der Selektivität und/oder Aktivität, enthalten. Bekannte Verfahren zur Regenerierung lassen sich sowohl zur Regenerierung trägerfreier Edelmetallmohre als auch trägergebundender Suspensionskatalysatoren heranziehen. Der wesentliche Unterschied besteht darin, dass das Verfahren zur Regenerierung trägergebundener Katalysatoren obligatorisch einen Filtrationsschritt zur Abtrennung des Trägers umfasst.

Technisch bedeutsame Hydrierungen, etwa die Hydrierstufe im Rahmen des Anthrachinonverfahrens zur Herstellung von Wasserstoffperoxid, lassen sich sowohl unter Einsatz von trägerfreien, im wesentlichen Palladium enthaltenden Katalysatoren, nachfolgend als Palladium-Mohre bezeichnet, als auch unter Verwendung von im wesentlichen Palladium als wirksame Hauptkomponente enthaltenden Trägerkatalysatoren durchführen.

Beim Einsatz edelmetallhaltiger Suspensionskatalysatoren kommt es im Dauerbetrieb leicht zu einer Anreicherung verschiedener anderer Metalle oder Metallverbindungen. Diese Fremdstoffe werden in Form geringster Verunreinigungen mit den Rohstoffen in das System eingetragen und/oder stammen aus dem Abtrag des Materials der Anlage, in welcher die Umsetzung stattfindet. Ein derartiger Anstieg von Nicht-Edelmetallen in Platingruppenmetall-Suspensionskatalysatoren ist bei der Hydrierstufe des sogenannten Anthrachinonverfahrens zur Herstellung von Wasserstoffperoxid zu beobachten: Bei Verwendung eines Hydrierreaktors aus einem üblichen Edelstahl steigt beispielsweise der Gehalt an Eisen, Chrom und Nickel im edelmetallhaltigen Katalysator an. Um konstante Betriebsbedingungen im System aufrechterhalten zu können, ist es demgemäß wünschenswert, den Gehalt an Nicht-Platinmetallen im Gesamtsystem möglichst konstant zu halten. Die Aufgabe der vorliegenden Erfindung richtet sich demgemäß darauf, ein Verfahren aufzuzeigen, um die Regenerierung eines Platingruppenmetall-Suspensionskatalysators so durchzuführen, dass in den Hydrierprozess eingeschleppte Nicht-Platingruppenmetalle zumindest teilweise aus dem Katalysator ausgetragen werden.

Im Stand der Technik werden zur Regenerierung eines Platingruppenmetall-Suspensionskatalysators das oder die Platingruppenmetalle in Gegenwart eines Oxidationsmittels in Salzsäure gelöst und in das/die entsprechende/n Chlorid/e überführt. An die Auflösung des Edelmetalls schließt sich im Falle trägergebundener Katalysatoren ein Filtrationsschritt obligatorisch an, um den Träger abzutrennen - siehe GB 1,090,294. Im Falle von trägerfreien Katalysatoren ist eine Filtration nur bei Bedarf erforderlich. Die erhaltene Edelmetallchloridlösung wird anschließend zur Herstellung des Katalysators verwendet, wobei das Edelmetall in Anwesenheit oder Abwesenheit eines Trägermaterials mittels eines Reduktionsmittels ausgefällt wird. Während der Ausfällung wird üblicherweise der pH-Wert aus dem stark sauren in das mäßig basische Gebiet verschoben. Bekannte Reduktionsmittel für die Ausfällung des Edelmetalls sind Formaldehyd, Ameisensäure und elementarer Wasserstoff. Beispielhaft wird auf das GB-Patent 922,021 verwiesen, in dem das zuvor skizierte Verfahren unter Einsatz von HCl/Cl₂ zur Auflösung von Palladium aus einem palladiumhaltigen Trägerkatalysator und Verwendung von Formaldehyd als Reduktionsmittel zum Ausfällen von Palladium in Gegenwart eines frischen Trägermaterials beschrieben wird. Unter den Fällbedingungen werden die üblicherweise mit dem Katalysator eingebrachten Nicht-Platingruppenmetalle, wie Eisen, Chrom und Nickel, in Form eines Hydroxids und/oder Carbonats mit dem Palladium copräzipiert.

Zur Abtrennung der Nicht-Platingruppenmetalle aus der Platingruppenmetallchlorid enthaltenden wässrigen Lösung wurde bisher das Platingruppenmetall durch Zugabe eines elektropositiveren Metalls als das auszufällende Platingruppenmetall, wie insbesondere Eisen oder Zink, ausgefällt. Das so ausgefällte Platingruppenmetall wird aus der Lösung abgetrennt. Da die katalytische Aktivität des so gewonnenen Edelmetalls ungenügend ist, muss sich an diesen ersten Fällungsschritt (Zementation) eine erneute Auflösung des Platingruppenmetalls und Ausfällung unter Bedingungen der Entstehung eines sehr feinteiligen und damit aktiven Katalysators erfolgen. Das zweimalige Auflösen und Ausfällen des Platingruppenmetalls ist technisch aufwendig, so dass die Fachwelt an einem einfacheren Verfahren interessiert ist.

Gefunden wurde ein Verfahren zur Regenerierung eines trägergebundenen oder trägerfreien Suspensionskatalysators auf der Basis mindestens eines Platingruppenmetalls, umfassend Auflösen der anwesenden Platingruppenmetalle in wässriger HCl, unter Verwendung eines Oxidationsmittels für Platingruppenmetalle, Filtration unlöslicher Bestandteile und Ausfällung der Platingruppenmetalle mittels eines Reduktionsmittels bei einem pH-Wert im Bereich von 2 bis 10, das dadurch gekennzeichnet ist, dass man die Fällung in Gegenwart einer mindestens stöchiometrischer Menge eines Chelatkomplexbildners für ein oder mehrere Metalle aus der Reihe der Metalle der Gruppen 2a, 3a, 4a des Periodensystems sowie der Übergangselemente ohne Elemente der Platingruppe durchführt und dabei komplexierfähige Nicht-Platingruppenmetalle ganz oder teilweise in Lösung hält.

Das erfindungsgemäße Verfahren richtet sich vorzugsweise auf solche Suspensionskatalysatoren, welche als wirksame Komponenten mindestens 50 Gew.-% Palladium, weniger als 50 Gew.-% eines oder mehrerer anderer Platingruppenmetalle und 0,001 bis 10 Gew.-%, bevorzugt 0,01 bis 10 Gew.-% Nicht-Platingruppenmetalle, welche auch in Form von Verbindungen vorliegen können, enthält. Besonders bevorzugt richtet sich die Erfindung auf die Regenerierung von Platingruppenmetall-Mohren, insbesondere Palladium-Mohr, wobei dieser Begriff stets auch die Anwesenheit anderer Platingruppenmetalle und in geringem Umfang auch anderer modifizierender Metalle umfasst.

Durch die Anwesenheit eines Chelatkomplexbildners während der Ausfällung des einen oder der mehreren Platingruppenmetalle werden komplexierfähige Nicht-Platingruppenmetalle ganz oder teilweise in Lösung gehalten, so dass der Gehalt an diesen Metallen im ausgefällten Platingruppenmetall-Suspensionskatalysator vermindert wird. Der Chelatkomplexbildner wird hierbei in wirksamer Menge eingesetzt, insbesondere in mindestens stöchiometrischer und vorzugsweise in überstöchiometrischer Menge, bezogen auf die abzutrennenden Metalle.

Zum Einsatz können an sich beliebige Chelatkomplexbildner gelangen, welche unter den Reaktionsbedingungen der Fällung ausreichend stabil und wirksam sind. Vorzugsweise handelt es sich bei den Komplexbildnern um Verbindungen aus der Reihe der Aminopolycarbonsäuren, Polyhydroxycarbonsäuren und Aminopolyphosphonsäuren sowie deren wasserlöslichen Salze. Besonders wirksame Chelatkomplexbildner sind Verbindungen aus der Reihe Iminodiessigsäure, Nitrilotriessigsäure, Ethylendiamintetraessigsäure, Diethylentriaminpentaessigsäure, Aminotri(methylenphosphonsäure), Ethylendiamintetra(methylenphosphonsäure), Diethlyentriaminpenta(methylenphosphonsäure), Hydroxymethandiphosphonsäure, Weinsäure, Zitronensäure, Polyoxycarbonsäuren (POC), Polyacrylsäuren und wasserlösliche Salze der genannten Säuren.

Zur Auflösung der Platingruppenmetalle eignet sich außer dem in der GB 922,021 genannten Chlor auch Brom und insbesondere Wasserstoffperoxid (siehe EP-B 0 611 126).

Zur Ausfällung von Platingruppenmetallen in Gegenwart oder Abwesenheit eines Trägermaterials in katalytisch hochwirksamer Form werden Reduktionsmittel aus der Reihe der Aldehyde, insbesondere Formaldehyd, sowie Ameisensäure oder ein Formiat verwendet. Wirksame Katalysatoren lassen sich auch unter Verwendung eines Hydrids oder komplexen Hydrids, wie Natriumboranat, sowie mit elementarem Wasserstoff gewinnen.

Die in Gegenwart eines erfindungsgemäßen Chelatkomplexbildners durchgeführte Ausfällung des Platingruppenmetalls erfolgt üblicherweise bei einem pH-Wert im Bereich von etwa 2 bis etwa 10. Vorzugsweise wird während der Ausfällung der pH-Wert erhöht. Gemäß einer besonders bevorzugten Ausführungsform wird bei einem pH-Wert im Bereich von 2 bis 3 die Zugabe des Reduktionsmittels begonnen, und während der Zugabe des weiteren Reduktionsmittels wird kontinuierlich oder stufenweise der pH-Wert erhöht, insbesondere auf einen End-pH-Wert im Bereich von 8 bis 9.

Es wurde festgestellt, dass durch die Fällung des Platingruppenmetalls in Gegenwart eines Chelatkomplexbildners Katalysatoren mit höherer Aktivität erhalten werden als durch eine Fällung in Abwesenheit eines Chelatkomplexbildners.

Wie die nachfolgenden Versuche anhand der Regenerierung von gebrauchtem Palladium-Mohr aus zwei Produktionsanlagen zur Herstellung von Wasserstoffperoxid nach dem Anthrachinonverfahren hervorgeht, lassen sich unter den Fällungsbedingungen Elemente, wie Aluminium, Eisen, Chrom und Nickel gut komplexieren. Unter Verwendung der beispielsgemäßen Komplexierungsmittel lassen sich Kupfer und Quecksilber jedoch nur sehr unvollständig komplexieren und in Lösung halten.

### Beispiele

Untersucht wurde das erfindungsgemäße Verfahren unter Verwendung von aus der Hydrierstufe von zwei Anlagen zur Herstellung von Wasserstoffperoxid nach dem Anthrachinonverfahren ausgeschleustem Palladium-Mohr.

Die Regenerierung erfolgte wie folgt:

Das ausgeschleuste Pd-Mohr wurde mit Salzsäure (4-8 ml HCl (32 Gew.-%) pro g Pd) und H₂O₂ (1-3 ml H₂O₂ (40 Gew.-%) pro g Pd) in Lösung gebracht und die entstandene Palladiumchlorid-Lösung zur Entfernung von Feststoffen filtriert. Die salzsaure Palladiumchlorid-Lösung mit einem Pd-Gehalt von 5 bis 20 g/l wurde unter Stickstoffatmosphäre auf 70 bis 80 °C erwärmt und Ethylendiamintetraessigsäure als Komplexbildner (0,5 g pro g Pd) zugegeben. Durch Zugabe von Natronlauge wurde ein pH von etwa 3 eingestellt und dann eine Teilmenge (0,1 - 0,2 ml HCOOH pro g Pd) Ameisensäure zugegeben. Anschließend wurde mit Natronlauge ein pH von etwa 9 eingestellt und weiter Ameisensäure (0,3 bis 0,6 ml HCOOH pro g Pd) zur quantitativen Pd-Ausfällung zugegeben. Das ausgefallene Palladium wurde mit Wasser chloridfrei gewaschen und abgesaugt.

Die Proben der gebrauchten und regenerierten Pd-Mohre wurden zur Entfernung anhaftender Lösungsmittelreste beziehungsweise Wasserreste mit Aceton gewaschen und getrocknet. Die Bestimmung der Beielemente erfolgte mittels ICP-Spektroskopie. Der Tabelle sind die Ergebnisse (Angaben in Gew.-%, bezogen auf Pd) zu entnehmen.

| Element | Beispiel 1 | | Beispiel 2 | |
|---|---|---|---|---|
| | regenerierte s Pd-Mohr "r 1" | gebrauchtes Pd-Mohr "g 1" | regenerierte s Pd-Mohr "r 2" | gebrauchtes Pd-Mohr "g 2" |
| Al (%) | < 0,005 | 0,21 | 0,007 | 0,04 |
| Ce (%) | < 0,005 | < 0,005 | < 0,005 | < 0,005 |
| Co (%) | < 0,005 | < 0,005 | < 0,005 | < 0,005 |
| Cr (%) | < 0,005 | 0,17 | < 0,005 | 0,012 |
| Cu (%) | 0,46 | 0,45 | 0,036 | 0,04 |
| Fe (%) | 0,007 | 0,42 | 0,012 | 0,03 |
| Hg (%) | 2,3 | 2,6 | 0,17 | 0,12 |
| La (%) | < 0,01 | < 0,01 | < 0,01 | < 0,01 |
| Mn (%) | < 0,002 | 0,007 | < 0,002 | < 0,002 |
| Ni (%) | < 0,005 | 0,042 | < 0,005 | < 0,005 |
| Ti (%) | < 0,002 | < 0,002 | < 0,002 | < 0,002 |
| Zr (%) | < 0,001 | < 0,001 | < 0,001 | < 0,001 |

Aus der Tabelle folgt, dass Hg und Cu vor und nach der Regenerierung im Katalysator enthalten sind, also nur in geringem Umfang komplexiert werden.

Der Gehalt an Al, Cr, Fe und Ni in den gebrauchten Proben "g 1" und "g 2" liegt deutlich oberhalb jenen Werten, welche die regenerierten Pd-Mohre "r 1" und "r 2" aufweisen. Die genannten Elemente verbleiben bei der Ausfällung von Pd in der Lösung und werden damit vom Katalysator abgetrennt. Fe, Cr und Ni stammen aus dem Edelstahl von Apparaten, mit welchen die Arbeitslösung im Rahmen des H₂O₂-Verfahrens in Berührung kommt. Al stammt aus Al₂O₃, das in der Regenerierung der Arbeitslösung eingesetzt wird.

## Patentansprüche

1. Verfahren zur Regenerierung eines trägergebundenen oder trägerfreien Suspensionskatalysators auf der Basis mindestens eines Platingruppenmetalls, umfassend Auflösen der anwesenden Platingruppenmetalle in wäßriger HCl, unter Verwendung eines Oxidationsmittels für Platingruppenmetalle, Filtration unlöslicher Bestandteile und Ausfällung der Platingruppenmetalle mittels eines Reduktionsmittels bei einem pH-Wert im Bereich von 2 bis 10,
**dadurch gekennzeichnet,**
**dass** man die Fällung in Gegenwart einer mindestens stöchiometrischen Menge eines Chelatkomplexbildners für ein oder mehrere Metalle aus der Reihe der Metalle der Gruppen 2a, 3a, 4a des Periodensystems sowie der Übergangselemente ohne Elemente der Platingruppe durchführt und dabei komplexierfähige Nicht-Platingruppenmetalle ganz oder teilweise in Lösung hält.

2. Verfahren nach Anspruch 1,
**dadurch gekennzeichnet,**
**dass** ein trägerfreier Katalysator auf der Basis von mindestens 50 Gew.-% Palladium, 0 bis weniger als 50 Gew.-% eines oder mehrerer anderer Platingruppenmetalle und 0,001 % bis 10 Gew.-% mindestens eines komplexierfähigen Metalls aus der Reihe der Gruppen 2a, 3a, 4a des Periodensystems sowie der Übergangselemente ohne Elemente der Platingruppe regeneriert wird, indem man die Fällung in Gegenwart einer überstöchiometischen Menge eines Chelatkomplexbildners durchführt.

3. Verfahren nach Anspruch 1 oder 2,
**dadurch gekennzeichnet,**
**dass** man als Oxidationsmittel Chlor oder Wasserstoffperoxid und als Reduktionsmittel einen Aldehyd, insbesondere Formaldehyd, ein Formiat oder Ameisensäure, ein Hydrid oder Wasserstoff verwendet.

4. Verfahren nach einem der Ansprüche 1 bis 3,
**dadurch gekennzeichnet,**
**dass** man einen Chelatkomplexbildner aus der Reihe der Aminopolycarbonsäuren, Polyhydroxycarbonsäuren,-Aminopolyphosphonsäuren verwendet.

5. Verfahren nach Anspruch 4,
**dadurch gekennzeichnet,**
**dass** man einen Komplexbildner aus der Reihe Iminodiessigsäure, Nitrilotriessigsäure, Ethylendiamintetraessigsäure, Diethylentriaminpentaessigsäure, Aminotri(methylenphosphonsäure), Ethylendiamintetra(methylenphosphonsäure), Diethlyentriaminpenta(methylenphosphonsäure), Hydroxymethandiphosphonsäure, Weinsäure, Zitronensäure, Polyoxycarbonsäuren (POC) und wasserlösliche Salze der genannten Säuren verwendet.

6. Verfahren nach einem der Ansprüche 1 bis 5,
**dadurch gekennzeichnet,**
**dass** man die Fällung des/der Platingruppenmetalle mit einem Reduktionsmittel aus der Reihe Formaldehyd, Formiat oder Ameisensäure durchführt, wobei man während der Zugabe des Reduktionsmittls den pH-Wert kontinuierlich oder schrittweise von 2 bis 3 auf 8 bis 9 erhöht.

## Claims

1. A process for the regeneration of a supported or unsupported suspension catalyst based on at least one platinum group metal, comprising dissolution of the platinum group metals present in aqueous HCl, using an oxidising agent for platinum group metals, filtration of insoluble constituents and precipitation of the platinum group metals by means of a reducing agent at a pH in the range from 2 to 10,
**characterised in that**
precipitation is carried out in the presence of an at least stoichiometric amount of a chelating agent for one or more metals of the series of metals of groups 2a, 3a, 4a of the periodic system and transition elements without elements of the platinum group, and non-platinum group metals capable of forming complexes are kept wholly or partially in solution.

2. A process according to claim 1,
**characterised in that**
an unsupported catalyst based on at least 50 wt.% of palladium, 0 to less than 50 wt.% of one or more other platinum group metals and 0.001 % to 10 wt.% of at least one metal capable of forming complexes from the series of groups 2a, 3a, 4a of the periodic system and transition elements without elements of the platinum group is regenerated by carrying out precipitation in the presence of a more than stoichiometric amount of a chelating agent.

3. A process according to claim 1 or 2,
**characterised in that**
the oxidising agent used is chlorine or hydrogen peroxide and the reducing agent used is an aldehyde, particularly formaldehyde, a formate or formic acid, a hydride or hydrogen.

4. A process according to one of claims 1 to 3,
**characterised in that**
a chelating agent from the series comprising aminopolycarboxylic acids, polyhydroxycarboxylic acids, aminopolyphosphonic acids is used.

5. A process according to claim 4,
**characterised in that**
a chelating agent from the series comprising iminodiacetic acid, nitrilotriacetic acid, ethylenediamine tetraacetic acid, diethylenetriamine pentaacetic acid, amino-tri(methylenephosphonic acid), ethylenediamine tetra(methylenephosphonic acid), diethylenetriamine penta(methylenephosphonic acid), hydroxymethane diphosphonic acid, tartaric acid, citric acid, polyoxycarboxylic acids (POC) and water-soluble salts of the acids mentioned are used.

6. A process according to one of claims 1 to 5,
**characterised in that**
precipitation of the platinum group metal(s) is carried out with a reducing agent from the series comprising formaldehyde, formate or formic acid, the pH being raised continuously or in stages from 2 to 3 to 8 to 9 during the addition of the reducing agent.

## Revendications

1. Procédé de régénération d'un catalyseur en suspension lié à un support ou sans support à base d'au moins un métal du groupe platine, comprenant la dissolution des métaux du groupe platine présents dans le HCl aqueux, en utilisant un agent d'oxydation pour les métaux du groupe platine, une filtration de constituants insolubles et une précipitation des métaux du groupe platine au moyen d'un agent de réduction à un pH de l'ordre de 2 à 10,
**caractérisé en ce que**
la précipitation est réalisée en présence d'une quantité au moins stoechiométrique d'un agent complexant chélateur d'un ou plusieurs métaux de la série des métaux des groupes 2a, 3a, 4a de la Classification périodique des éléments ainsi que des éléments de transition sans éléments du groupe platine, les métaux autres que ceux du groupe platine aptes à la complexion étant maintenus entièrement ou partiellement en solution.

2. Procédé selon la revendication 1,
**caractérisé en ce que**,
un catalyseur sans support à base d'au moins 50 % en poids de palladium, 0 à moins de 50 % en poids d'un ou plusieurs autres métaux du groupe platine et 0,001 % à 10 % en poids d'au moins un métal apte à la complexion de la série des groupes 2a, 3a, 4a de la Classification périodique des éléments ainsi que des éléments de transition sans éléments du groupe platine, est régénéré en réalisant la précipitation en présence d'une quantité surstoechiométrique d'un agent complexant chélateur.

3. Procédé selon la revendication 1 ou 2,
**caractérisé en ce que**
comme agent d'oxydation on utilise, du chlore ou du peroxyde d'hydrogène et, en tant qu'agent de réduction on utilise un aldéhyde, en particulier du formaldéhyde, un formiate ou de l'acide formique, un hydrure ou de l'hydrogène.

4. Procédé selon l'une quelconque des revendications 1 à 3,
**caractérisé en ce qu'**
on utilise un agent complexant chélateur de la série des acides aminopolycarboxyliques, des acides polyhydroxycarboxyliques, des acides aminopolyphosphoniques.

5. Procédé selon la revendication 4,
**caractérisé en ce qu'**
on utilise un agent complexant de la série acide iminodiacétique, acide nitrilotriacétique, acide éthylènediamine tétracétique, acide diéthylènetriamine pentacétique, acide amino-tri(méthylène phosphonique), acide éthylènediamine tétra(méthylène phosphonique), acide diéthylènetriamine-penta-(méthylène phosphonique), acide hydroxyméthane diphosphonique, acide tartrique, acide citrique, acides polyoxycarboxyliques (POC) et sels hydrosolubles des acides cités.

6. Procédé selon l'une quelconque des revendications 1 à 5,
**caractérisé en ce qu'**
on réalise la précipitation du métal/des métaux du groupe platine avec un agent de réduction de la série formaldéhyde, formiate ou acide formique, et on augmente le pH en continu ou pas à pas de 2 à 3 à 8 à 9 pendant l'addition de l'agent de réduction.
